(19) Europäisches Patentamt
European Patent Office
Office européen des brevets

(11) Veröffentlichungsnummer : **0 069 326**
**B1**

(12) # EUROPÄISCHE PATENTSCHRIFT

(45) Veröffentlichungstag der Patentschrift : **15.08.84**

(51) Int. Cl.³ : **C 09 D 3/727**, C 09 D 7/12, C 09 D 5/02

(21) Anmeldenummer : **82105744.5**

(22) Anmeldetag : **29.06.82**

(54) **Wässrige Kunststoffdispersion, Verfahren zu ihrer Herstellung und aus der Kunststoffdispersion hergestelltes Anstrichmittel.**

(30) Priorität : **04.07.81 DE 3126463**

(43) Veröffentlichungstag der Anmeldung : **12.01.83 Patentblatt 83/02**

(45) Bekanntmachung des Hinweises auf die Patenterteilung : **15.08.84 Patentblatt 84/33**

(84) Benannte Vertragsstaaten : **BE CH DE FR GB LI NL SE**

(56) Entgegenhaltungen :
**EP-A- 0 009 110**
**AT-B- 294 997**
**DE-A- 2 056 934**

(73) Patentinhaber : **HOECHST AKTIENGESELLSCHAFT**
**Postfach 80 03 20**
**D-6230 Frankfurt am Main 80 (DE)**

(72) Erfinder : **Winstel, Wolfgang**
**Rossertstrasse 8**
**D-6093 Flörsheim am Main (DE)**

**EP 0 069 326 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf eine wäßrige Kunststoffdispersion auf der Basis mindestens einer olefinisch ungesättigten Verbindung, ein Verfahren zur Herstellung dieser Kunststoffdispersion und ein aus der Kunststoffdispersion hergestelltes Anstrichmittel.

Es ist bekannt, daß die Naßhaftung von Anstrichfilmen auf der Basis von wäßrigen Kunststoffdispersionen dadurch verbessert werden kann, daß man den Dispersionen bestimmte Additive zufügt. So wurde vorgeschlagen, bestimmte Salze von Acylestern der Hydroxymethanphosphonsäure als Additiv mit Emulgatorwirkung einzusetzen (vgl. deutsche Offenlegungsschrift 26 51 048 = US-Patentschrift 4 169 086). Ferner ist beschrieben, daß Polyglycidylamine mit mindestens zwei Glycidylgruppen oder deren Salze als Additive in wäßrigen Anstrichmitteln verwendet werden, wodurch man eine Verbesserung der Naßhaftung erreichen kann (vgl. europäische Patentveröffentlichung 9110).

Aufgabe der Erfindung ist die Bereitstellung einer wäßrigen Kunststoffdispersion, die als filmbildendes Polymer ein Polymer mindestens einer olefinisch ungesättigten Verbindung enthält und ein Zusatzmittel, durch dessen Verwendung die Naßhaftung von Anstrichfilmen, die aus der Kunststoffdispersion hergestellt werden, verbessert wird.

Die Erfindung betrifft eine wäßrige Kunststoffdispersion auf Basis eines Polymers mindestens einer olefinisch ungesättigten Verbindung, dadurch gekennzeichnet, daß sie besteht aus

a) 90 bis 99,8 Gewichtsprozent einer wäßrigen Dispersion eines Polymers mindestens einer olefinisch ungesättigten Verbindung, wobei die Dispersion einen üblichen Emulgator und ein übliches Dispergierhilfsmittel in üblicher Menge enthalten kann und einen Feststoffgehalt von 30 bis 60 Gewichtsprozent und eine minimale Filmbildetemperatur von Null bis + 50 °C aufweist, und

b) 0,2 bis 10 Gewichtsprozent eines Glycidylethers mit einem Epoxidwert von 0,1 bis 0,8.

Ferner betrifft die Erfindung ein Verfahren zur Herstellung einer wäßrigen Kunststoffdispersion auf der Basis eines Polymers mindestens einer olefinisch ungesättigten Verbindung, dadurch gekennzeichnet, daß

a) 90 bis 99,8 Gewichtsteile einer wäßrigen Dispersion eines Polymers mindestens einer olefinisch ungesättigten Verbindung, wobei die Dispersion einen üblichen Emulgator und ein übliches Dispergierhilfsmittel in üblicher Menge enthalten kann und einen Feststoffgehalt von 30 bis 60 Gewichtsprozent und eine minimale Filmbildetemperatur von Null bis + 50 °C aufweist, und

b) 0,2 bis 10 Gewichtsteile eines Glycidylethers mit einem Epoxidwert von 0,1 bis 0,8 homogen miteinander vermischt werden.

Der Feststoffgehalt der wäßrigen Polymerdispersion (Komponente a) beträgt üblicherweise 30 bis 60 Gewichtsprozent, vorzugsweise 45 bis 55 Gewichtsprozent, vorzugsweise 45 bis 55 Gewichtsprozent. Die minimale Filmbildetemperatur (MFT) der Dispersion liegt im Bereich von Null bis + 50 °C, vorzugsweise + 10 bis + 35 °C. Die Polymerdispersion bildet den Hauptbestandteil der erfindungsgemäßen Kunststoffdispersion, und zwar zu 90 bis 99,8 Gewichtsprozent, vorzugsweise 97 bis 99,5 Gewichtsprozent.

Grundlage der Polymerdispersion ist ein Polymer mindestens einer olefinisch ungesättigten Verbindung, insbesondere ein Polymer mindestens eines Alkylesters der Acrylsäure oder der Methacrylsäure mit 1 bis 10, vorzugsweise 1 bis 8 Kohlenstoffatomen im Alkylrest. Besonders bevorzugt ist ein Copolymer aus einem Alkylester der Acrylsäure oder Methacrylsäure, dessen Alkylrest 1 bis 10 Kohlenstoffatome aufweist, und einem Comonomer der Formel (1)

$$CH_2{=}CR{-}R^1 \qquad (1)$$

ist, in der R ein Wasserstoffatom oder ein Methylrest ist und $R^1$ (a) ein Wasserstoffatom, (b) ein Halogenatom, vorzugsweise ein Chloratom, (c) einem Phenylrest, (d) eine Nitrilgruppe, (e) eine Carboxylgruppe oder Sulfogruppe, (f) einen Aminocarbonylrest, (g) einen Alkylcarboxyrest mit 2 bis 12, vorzugsweise 2 bis 10 Kohlenstoffatomen oder (h) einen Alkoxyrest mit 1 bis 4 Kohlenstoffatomen bedeutet.

Als Beispiele für solche Comonomere der Formel (1) seien genannt

(a) Olefine wie Ethylen,

(b) Vinylhalogenide wie Vinylchlorid und Allylchlorid,

(c) Vinylaromaten wie Styrol und Methylstyrol,

(d) ungesättigte Nitrile wie Acrylnitril und Methacrylnitril,

(e) ungesättigte Monocarbonsäuren wie Acrylsäure und Methacrylsäure sowie Vinylsulfonsäure,

(f) ungesättigte Carbonsäureamide wie Acrylsäureamid, N-Methylolacrylsäureamid, Methacrylsäureamid und N-Methylolmethacrylsäureamid,

(g) Vinylester von aliphatischen Carbonsäuren mit 2 bis 12, vorzugsweise 2 bis 10 Kohlenstoffatomen wie Vinylacetat, Vinylpropionat, Vinylbutyrat, Vinylpivalat, Vinylisononat, Vinyllaurat und Vinyldecanate sowie Vinylester eines Gemisches von Monocarbonsäuren mit 9 bis 11 Kohlenstoffatomen,

(h) Vinylether wie Vinylmethylether, Vinylethylether und Vinylbutylether.

Ein wesentliches Merkmal der Erfindung ist die Tatsache, daß die wäßrige Kunststoffdispersion einen Glycidylether (Komponente b) enthält, und zwar in einer Menge von 0,2 bis 10, vorzugsweise 0,5 bis 3

Gewichtsprozent (bezogen auf die Kunststoffdispersion). Der Glycidylether weist einen Epoxidwert von 0,1 bis 0,8, vorzugsweise 0,2 bis 0,7 auf. (Der Epoxidwert drückt aus, wieviel Epoxidgruppen in 100 g des Harzes enthalten sind.) Der Glycidylether ist insbesondere ein Reaktionsprodukt aus Epichlorhydrin und einem aliphatischen Alkohol mit 1, 2, 3 oder 4 Hydroxylgruppen ; der Alkohol weist vorzugsweise selbst eine Epoxidgruppe auf. Geeignete Alkohole sind beispielsweise Glycid, 3-Methylolglycid (2,3-Epoxybutan-1,4-diol) und Glycerin ; die zugehörigen Glycidylether haben Epoxidwerte von 0,2, 0,5 und 0,65. Ferner eignen sich auch Glycidylether von Trimethylolpropan und von Pentaerythrit.

Die Polymerdispersion enthält gegebenenfalls übliche Emulgatoren, deren Menge im üblichen Rahmen liegt und im allgemeinen 0,5 bis 20 Gewichtsprozent, vorzugsweise 3 bis 10 Gewichtsprozent (bezogen auf die Polymerdispersion) beträgt.

Geeignete Emulgatoren sind insbesondere anionische Emulgatoren, vorzugsweise Alkalisalze oder Ammoniumsalze von Alkylsulfonsäuren, Arylsulfonsäuren oder Alkylarylsulfonsäuren sowie von den entsprechenden Schwefelsäuren, Phosphorsäuren oder Phosphonsäuren ; diese Säurederivate enthalten gegebenenfalls zwischen der anionischen Gruppe und dem jeweiligen Kohlenwasserstoffrest, der vorzugsweise 10 bis 18 Kohlenstoffatome aufweist, 5 bis 30 Ethylenoxideinheiten. Beispiele hierfür sind Natriumlaurylsulfat, Natriumoctylphenolglykolethersulfat, Natriumdodecylbenzolsulfonat, Natriumlauryldiglykolsulfat sowie das Ammoniumsalz von oxethyliertem und sulfatiertem Tri-t-butylphenol, t-Butylphenol oder Nonylphenol.

Geeignete Dispergierhilfsmittel (Netzmittel) sind insbesondere Salze, vorzugsweise Alkalisalze oder Ammoniumsalze, von Polyacrylsäure, Polymethacrylsäure, Polyvinylsulfonsäure oder Polyphosphorsäure, z. B. Natriumpolyacrylat, Natriumpolymethacrylat, Natriumpolyvinylsulfonat oder Natriumpolyphosphat.

Die erfindungsgemäße Kunststoffdispersion wird in einfacher Weise dadurch hergestellt, daß die einzelnen Komponenten in einem Mischgefäß, das eine gute Durchmischung gewährleistet, homogen miteinander vermischt werden, vorzugsweise durch Rühren. Dieses Vermischen wird üblicherweise bei einer Temperatur von 15 bis 30 °C durchgeführt. Als Mischgefäß dient vorzugsweise ein Rührgefäß ; die Rührgeschwindigkeit beträgt im allgemeinen 50 bis 3 000 Upm, vorzugsweise 100 bis 1 500 Upm.

Die Kunststoffdispersion weist einen pH-Wert von 6 bis 9 auf. Die Viskosität der Kunststoffdispersion liegt im Bereich von 10 bis 3 000 mPa · s, vorzugsweise 25 bis 2 500 mPa · s (gemessen bei einer Temperatur von 23 °C). Sie eignet sich als Grundlage von Anstrichmitteln, insbesondere auf Alkydharzuntergrund, die Anstrichfilme mit verbesserter Naßhaftung ergeben.

Die Prüfung der Naßhaftung wird wie folgt durchgeführt : Die Kunststoffdispersion wird zu einer Farbe verarbeitet, aus der mit Hilfe eines Rakels auf einem Alkydharzuntergrund ein Anstrich mit einer Schichtdicke von 200 µm (naß) hergestellt wird. Der Anstrich wird 24 Stunden lang bei einer Temperatur von 23 °C und einer relativen Luftfeuchtigkeit von 50 % getrocknet und dann auf einer Abriebvorrichtung mit Hilfe einer sich hin und her bewegenden, nassen Schweinsborstenbürste gebürstet, wobei der Anstrich durch Zugabe von Wasser feucht gehalten wird. Die Naßhaftung ist als gut zu bezeichnen, wenn der Anstrich nach mindestens 3 000 Doppelbürstenstrichen noch unbeschädigt ist.

Bei der Herstellung von Anstrichmitteln aus den erfindungsgemäßen Kunststoffdispersionen werden die üblichen Zusatzstoffe eingesetzt, nämlich Pigmente und Füllstoffe, Verdickungsmittel, Entschäumer, Verlaufhilfsmittel, Filmbildehilfsmittel und Konservierungsmittel. Als Pigmente und Füllstoffe dienen insbesondere Titandioxid (Rutiltyp), Bariumsulfat, Calciumcarbonat, Calcium-Magnesium-Silicat und Kaolin. Geeignete Verdickungsmittel sind Polyacrylsäure, Acrylsäure/Metharylsäure-Copolymer, Copolymere aus Maleinsäurealkylhalbester und Alkylvinylether oder Styrol sowie insbesondere Celluloseether wie Hydroxyethylcellulose, Methylhydroxyethylcellulose, Methylhydroxypropylcellulose und Carboxymethylcellulose. Als Entschäumer werden eingesetzt Tributylphosphat und Polysiloxan, und als Verlaufshilfsmittel eignen sich insbesondere Glykol und Propylenglykol-(1,2). Übliche Filmbildehilfsmittel sind Ethylglykol, Butylglykol, Ethylglykolacetat, Butylglykolacetat und Butyldiglykolacetat. Geeignete Konservierungsmittel sind insbesondere Handelsprodukte, die Chloracetamid enthalten oder Formaldehyd abspalten. Die Menge der Zusatzstoffe beträgt insgesamt 2 bis 4 Gewichtsprozent (bezogen auf das Anstrichmittel).

Die folgenden Beispiele dienen zur näheren Erläuterung der Erfindung. Prozentangaben beziehen sich jeweils auf das Gewicht.

## Beispiel 1

3 g eines handelsüblichen Epoxidharzes mit einem Epoxidwert von 0,6 werden in 97 g einer handelsüblichen wäßrigen Dispersion eines Copolymers aus 30 % n-Butylacrylat und 70 % Styrol, die eine minimale Filmbildetemperatur von 0 °C aufweist, eingerührt. Die Rührgeschwindigkeit beträgt dabei 100 Upm und die Temperatur 23 °C. Die Dispersion hat einen Feststoffgehalt von 50 %, einen pH-Wert von 8,5 und eine Viskosität von 25 mPa · s.

## Beispiel 2

1,5 g eines handelsüblichen Epoxidharzes mit einem Epoxidwert von 0,7 werden in 98,5 g einer

handelsüblichen wäßrigen Dispersion eines Copolymers aus 46 % 2-Ethylhexylacrylat und 54 % Styrol, die eine minimale Filmbildetemperatur von 18 °C aufweist, eingerührt. Die Rührgeschwindigkeit beträgt dabei 100 Upm und die Temperatur 23°. Die Dispersion hat einen Feststoffgehalt von 50 %, einen pH-Wert von 8 und eine Viskosität von 2 000 mPa · s.

Beispiel 3

1 g eines handelsüblichen Epoxidharzes mit einem Epoxidwert von 0,6 wird in 99 g einer handelsüblichen wäßrigen Dispersion eines Copolymers aus 50 % Methylmethacrylat und 50 % n-Butylacrylat, die eine minimale Filmbildetemperatur von 12 °C aufweist, eingerührt. Die Rührgeschwindigkeit beträgt dabei 100 Upm und die Temperatur 23 °C. Die Dispersion hat einen Feststoffgehalt von 50 %, einen pH-Wert von 9 und eine Viskosität von 2 000 mPa · s.

Beispiele 4 bis 6 (Anwendungsbeispiele)

Aus den nach den Beispielen 1 bis 3 erhaltenen Kunststoffdispersionen werden Anstrichfarben hergestellt. Dazu werden jeweils 100 g der Kunststoffdispersion in einem Dissolver mit folgenden Stoffen vermischt:

5,0 g Wasser
5,2 g eines handelsüblichen Netzmittels (Gemisch aus Natriumpolyphosphat und Natriumpolyacrylat)
0,4 g eines handelsüblichen Entschäumers (Polysiloxan)
36,0 g Titandioxid, Rutiltyp
0,4 g eines handelsüblichen Konservierungsmittels auf Chloracetamid-Basis
3,4 g Butyldiglykolacetat
4,7 g Propylenglykol-(1,2)
3,1 g eines handelsüblichen Verdickungsmittels (Copolymer aus Acrylsäure und Methacrylsäure)
1,7 g Natronlauge, 10 %ig
8,6 g eines handelsüblichen Polypropylenwachses mit einem Schmelzpunkt von 110 °C.

Die jeweils erhaltene Anstrichfarbe wird auf ihre Naßhaftung geprüft. Die Anstriche auf der Grundlage der nach den Beispielen 1 bis 3 erhaltenen Kunststoffdispersionen sind nach 5 000 Doppelbürstenstrichen noch unbeschädigt.

**Ansprüche**

1. Wäßrige Kunststoffdispersion auf Basis eines Polymers mindestens einer olefinisch ungesättigten Verbindung, dadurch gekennzeichnet, daß sie besteht aus

a) 90 bis 99,8 Gewichtsprozent einer wäßrigen Dispersion eines Polymers mindestens einer olefinisch ungesättigten Verbindung, wobei die Dispersion einen üblichen Emulgator und ein übliches Dispergierhilfsmittel in üblicher Menge enthalten kann und einen Feststoffgehalt von 30 bis 60 Gewichtsprozent und eine minimale Filmbildetemperatur von Null bis + 50 °C aufweist, und

b) 0,2 bis 10 Gewichtsprozent eines Glycidylethers mit einem Epoxidwert von 0,1 bis 0,8.

2. Kunststoffdispersion nach Anspruch 1, dadurch gekennzeichnet, daß das Polymer ein Polymer mindestens eines Alkylesters der Acrylsäure oder Methacrylsäure ist, dessen Alkylrest 1 bis 10 Kohlenstoffatome aufweist.

3. Kunststoffdispersion nach Anspruch 1, dadurch gekennzeichnet, daß das Polymer ein Copolymer aus einem Alkylester der Acrylsäure oder Methacrylsäure, dessen Alkylrest 1 bis 10 Kohlenstoffatome aufweist, und einem Comonomer der Formel (1)

$$CH_2{=}CR{-}R^1 \qquad (1)$$

ist, in der R ein Wasserstoffatom oder ein Methylrest ist und $R^1$ (a) ein Wasserstoffatom, (b) ein Halogenatom, (c) einen Phenylrest, (d) eine Nitrilgruppe, (e) eine Carboxylgruppe oder Sulfogruppe, (f) einen Aminocarbonylrest, (g) einen Alkylcarboxyrest mit 2 bis 12 Kohlenstoffatomen oder (h) einen Alkoxyrest mit 1 bis 4 Kohlenstoffatomen bedeutet.

4. Kunststoffdispersion nach Anspruch 1, dadurch gekennzeichnet, daß der Glycidylether ein Reaktionsprodukt aus Epichlorhydrin und einem aliphatischen Alkohol mit 1, 2, 3 oder 4 Hydroxylgruppen ist.

5. Kunststoffdispersion nach Anspruch 4, dadurch gekennzeichnet, daß der Alkohol eine Epoxidgruppe aufweist.

6. Verfahren zur Herstellung einer wäßrigen Kunststoffdispersion auf der Basis eines Polymers mindestens einer olefinisch ungesättigten Verbindung, dadurch gekennzeichnet, daß

a) 90 bis 99,8 Gewichtsteile einer wäßrigen Dispersion eines Polymers mindestens einer olefinisch ungesättigten Verbindung, wobei die Dispersion einen üblichen Emulgator und ein übliches Dispergierhilfsmittel in üblicher Menge enthalten kann und einen Feststoffgehalt von 30 bis 60 Gewichtsprozent und eine minimale Filmbildetemperatur von Null bis + 50 °C aufweist, und

b) 0,2 bis 10 Gewichtsteile eines Glycidylethers mit einem Epoxidwert von 0,1 bis 0,8 homogen miteinander vermischt werden.

7. Anstrichmittel auf Basis einer wäßrigen Kunststoffdispersion, dadurch gekennzeichnet, daß die Kunststoffdispersion eine Kunststoffdispersion gemäß Anspruch 1 ist.

## Claims

1. An aqueous plastics dispersion based on a polymer of at least one olefinically unsaturated compound, characterized in that it is composed of

a) 90 to 99.8 per cent by weight of an aqueous dispersion of a polymer of at least one olefinically unsaturated compound, it being possible for the dispersion to contain a customary emulsifier and a customary dispersing auxiliary in a customary amount, and the dispersion having a solids content of 30 to 60 per cent by weight and a minimum film-forming temperature of zero to + 50 °C, and

b) 0.2 to 10 per cent by weight of a glycidyl ether having an epoxide value of 0.1 to 0.8.

2. A plastics dispersion as claimed in claim 1, wherein the polymer is a polymer of at least one alkyl ester of acrylic acid or methacrylic acid in which the alkyl radical has 1 to 10 carbon atoms.

3. A plastics dispersion as claimed in claim 1, wherein the polymer is a copolymer formed from an alkyl ester of acrylic acid or methacrylic acid in which the alkyl radical has 1 to 10 carbon atoms and from a comonomer of the formula (1)

$$CH_2{=}CR{-}R^1 \qquad (1)$$

in wich R is a hydrogen atom or a methyl radical and $R^1$ denotes (a) a hydrogen atom, (b) a halogen atom, (c) a phenyl radical, (d) a nitrile groupe, (e) a carboxyl or sulfo group, (f) an aminocarbonyl radical, (g) an alkylcarboxy radical having 2 to 12 carbon atoms or (h) an alkoxy radical having 1 to 4 carbon atoms.

4. A plastics dispersion as claimed in claim 1, wherein the glycidyl ether is a product formed from the reaction between epichlorohydrin and an aliphatic alcohol having 1, 2, 3 or 4 hydroxyl groups.

5. A plastics dispersion as claimed in claim 4, wherein the alcohol contains an epoxide group.

6. A process for the preparation of an aqueous plastics dispersion based on a polymer of at least one olefinically unsaturated compound, which comprises mixing homogeneously with one another

a) 90 to 99.8 parts by weight of an aqueous dispersion of a polymer of at least one olefinically unsaturated compound, it being possible for the dispersion to contain a customary emulsifier and a customary dispersing auxiliary in a customary amount, and the dispersion having a solids content of 30 to 60 per cent by weight and a minimum film-forming temperature of zero to + 50 °C, and

b) 0.2 to 10 parts by weight of a glycidyl ether having an epoxide value of 0.1 to 0.8.

7. A surface coating based on an aqueous plastics dispersion, wherein the plastics dispersion is a plastics dispersion as claimed in claim 1.

## Revendications

1. Dispersion aqueuse de matières plastiques à base d'un polymère d'au moins un composé à insaturation oléfinique caractérisée en ce qu'elle est constituée :

a) de 90 à 99,8 % en poids d'une dispersion aqueuse d'un polymère d'au moins un composé à insaturation oléfinique, la dispersion pouvant contenir un émulsionnant habituel et un adjuvant de dispersion habituel en la quantité habituelle et présentant une teneur en matière solide de 30 à 60 % en poids et une température minimale de formation de feuil de 0 à + 50 °C, et

b) de 0,2 à 10 % en poids d'un éther glycidylique ayant un indice d'époxy de 0,1 à 0,8.

2. Dispersion de matières plastiques suivant la revendication 1, caractérisée en ce que le polymère est un polymère d'au moins un acrylate ou méthacrylate d'alkyle dont le radical alkyle contient de 1 à 10 atomes de carbone.

3. Dispersion de matières plastiques suivant la revendication 1, caractérisée en ce que le polymère est un copolymère d'un acrylate ou méthacrylate d'alkyle dont le radical alkyle contient de 1 à 10 atomes de carbone, et d'un comonomère répondant à la formule (1)

$$CH_2{=}CR{-}R^1 \qquad (1)$$

dans laquelle R est un atome d'hydrogène ou un radical méthyle et $R^1$ (a) un atome d'hydrogène, (b) un atome d'halogène, (c) un radical phényle, (d) un radical cyano, (e) un groupe carboxy ou un groupe sulfo,

(f) un radical aminocarbonyle, (g) un radical alkylcarbonyloxy en $C_2$ à $C_{12}$, ou (h) un radical alcoxy en $C_1$ à $C_4$.

4. Dispersion de matières plastiques suivant la revendication 1, caractérisée en ce que l'éther glycidylique est un produit de la réaction de l'épichlorhydrine et d'un alcool aliphatique ayant 1, 2, 3 ou 4 groupes hydroxyles.

5. Dispersion de matières plastiques suivant la revendication 4, caractérisée en ce que l'alcool présente un groupe époxy.

6. Procédé de préparation d'une dispersion aqueuse de matières plastiques à base d'un polymère d'au moins un composé à insaturation oléfinique, procédé caractérisé en ce qu'on mélange entre eux d'une manière homogène :

a) de 90 à 99,8 parties en poids d'une dispersion aqueuse d'un polymère d'au moins un composé à insaturation oléfinique, la dispersion pouvant contenir un émulsionnant habituel et un adjuvant de dispersion habituel en une quantité habituelle et présentant une teneur en matière solide de 30 à 60 % en poids et une température minimale de formation de feuil de 0 à + 50 °C, et

b) de 0,2 à 10 parties en poids d'un éther glycidylique ayant un indice d'époxy de 0,1 à 0,8.

7. Peinture à base d'une dispersion aqueuse de matières plastiques, caractérisée en ce que la dispersion de matières plastiques est une dispersion de matières plastiques suivant la revendication 1.